# EUROPEAN PATENT APPLICATION

(11) **EP 3 266 926 A1**
(43) Date of publication of application: **10.01.2018**
(21) Application number: 17176881.5
(22) Date of filing: 20.06.2017
(51) Int. Cl.: D06F 75/10, D06F 75/26, D06F 75/12

(54) **A METHOD OF GENERATING STEAM AND A STEAM GENERATION SYSTEM**

(30) Priority: 06.07.2016 ES 201630918; 14.10.2016 DE 102016220174
(71) Applicant: BSH Hausgeräte GmbH, 81739 München (DE)
(72) Inventor: Blanco Rodríguez del, Ivan, 01006 Vitoria (ES); Lavezzari, Stefano, 01015 Vitoria (Alava) (ES)

(57) **Abstract**

The invention concerns a method of heating water in a household appliance (60, 32, 100), comprising pumping water from a water supply (1) to a heater (28) through a conduit (26) at a lower power level depending on there being a condition corresponding to air being in the pump (22), the method further comprising pumping water from the water supply (1) to the heater (28) at a higher power level. It moreover concerns a water heating system in a household appliance (60, 32, 100), comprising a water supply (1), a heater (28), a pump (22), a conduit (26) and a controller (20) configured to drive the pump (22) to pump water from the water supply (1) through the conduit (26) to the heater (28) for heating the water, wherein the controller (20) is configured to drive the pump (22) at a lower power level depending on there being an air in the pump (22) condition and wherein the controller (20) is configured to drive the pump (22) at a higher power level. With the invention, noise in the operation of the household appliance (60, 32, 100) can be reduced.

## Description

### Field of the invention

The present invention is concerned with a method of heating water in a household appliance, comprising pumping water from a water supply to a heater through a conduit at a power level. Further, the present invention is concerned with a water heating system in a household appliance, comprising a water supply, a heater, a pump, a conduit and a controller configured to drive the pump to pump water from the water supply through the conduit to the heater for heating water.

### Background of the invention

US 6212332 discloses a steam iron station that has a removable tank mounted in a case. Also included is a conduit adapted to be coupled to a steam iron. The station includes a pump mounted in the case and coupled to the conduit for discharging to the conduit liquid drawn from the tank. The steam iron includes an electrical heater mounted in a soleplate.

The pump of US 6212332 has a solenoid-operated piston controlled by a pump controller inside the case. The pump controller has a capacitive timing circuit that drives a D-type flip flop to operate a thermistor-controlled pump.

The pump can supply water to a steam iron in either a continuous or enhanced (super steam) mode. In both modes, the pump reciprocates during an active interval, and stops reciprocating during a subsequent, quiescent interval. The quiescent interval is shortened to increase the pumping volume during the enhanced mode.

In either event, the pump enables steam generation, even if the steam iron is held upright, as when removing wrinkles from a hanging garment. Unlike steam irons relying on gravity to supply water from a reservoir, the pump provides a positive, reliable supply.

WO 2006/069838 A1 concerns a hot beverage machine provided with a water tank, a pump and a flow heater. A valve directs the water either to a brewing chamber or to a steam separator for frothing milk.

It has been found that pump operated household devices can cause unwanted pumping noise when air rather than water enters the pump. This may happen due to water in the tank being emptied and also due to evaporation of water over long periods of non-use.

### Objective of the invention

The present invention aims to provide a method of generating steam and a steam generation system that are able to operate with reduced noise when conditions occur of air in a pump connecting a heater and a water supply.

### Solution according to the invention

The objective is achieved by a method of heating water in a household appliance, comprising pumping water from a water supply to a heater through a conduit at a lower power level depending on there being a condition corresponding to air being in the pump. In other words, if the air in the pump condition is met, water is pumped from the water supply to the heater through the conduit at the lower power level. Moreover, the method comprises pumping water from the water supply to the heater at a higher power level.

The objective is also achieved by a water heating system in a household appliance, comprising a water supply, a heater, a pump, a conduit, and a controller configured to drive the pump to pump water from the water supply to the heater for generating steam through a conduit, wherein the controller is configured to drive the pump at a lower power level depending on there being an air in the pump condition and wherein the controller is configured to drive the pump at a higher power level.

According to the solution so defined, noise caused by pumping when air is in the pump can be reduced by operating at a lower power level when a condition corresponding to air being in the pump is determined. Once the air is cleared from the pump, the pumping power can operate at the higher level. Here, the higher power level and the lower power level should be understood relative to each other.

### Preferred embodiments of the invention

Preferred features of the invention which may be applied alone or in combination are discussed in the dependent claims. Reference numerals in the claims are not meant to limit the scope of the claims but merely serve to facilitate reading of the claims by means of reference to one or more exemplary embodiments.

The method may comprise the step of determining the condition corresponding to air being in the pump and based thereon pumping water from the water supply to the heater through the conduit at the lower power level. The method may comprise on one hand pumping water from the water supply to the heater at the higher power level after the step of pumping water from the water supply to the heater through the conduit at the lower power level when there has been determination of the condition corresponding to air in the hose, and on the other hand pumping water from the water supply to the heater at the higher power level without the preceding stage of pumping water from the water supply to the heater through the conduit at the lower power level when there has been no determination of the condition corresponding to air in the pump.

The controller of the system may be configured to determine the condition corresponding to air being in the pump and based thereon pumping water from the water supply to the heater through the conduit at the lower power level. The controller may be configured to operate in a first mode when an air in the pump condition has been determined in which the controller is configured to first drive the pump at the lower power level and thereafter increase the power supplied to the pump to drive the pump at the higher power level, and the controller is configured to operate in a second mode when no air in the pump condition has been determined in which the controller is configured to drive the pump at the higher power level.

The method may comprise determining a water or steam flow level setting and based thereon determining the higher power level for pumping water to the heater in order to achieve the steam or water flow level setting. Preferably, the higher power level is regulated according to a water or steam level setting. Accordingly, the preferred controller is configured to drive the pump at the higher power level according to a control scheme for achieving the water or steam flow level setting.

The method may further comprise determining the air in the pump condition and, depending on whether there is the air in the pump condition determined, pumping water to the heater at the lower power level before increasing the pumping power to the higher power level. In other words, if the air in the pump condition is met, water is pumped to the heater at the lower power level before increasing the pumping power to the higher power level.

The controller of the system may be configured to determine a water or steam flow level setting and based thereon determining the higher power level for pumping water to the heater in order to achieve the water or steam flow level setting. The controller may further be configured to determine the air in the pump condition and, depending on whether there is the air in the pump condition determined, to drive the pump at the lower power level before increasing the pumping power to the higher power level.

The condition of air being in the pump described herein means an indicator is present of air being present in the pump. It does not require air to actually be in the pump because air in the pump is, in the preferred embodiments, determined indirectly by one or more conditions being present that indicate air is probably in the pump, as described below. Thus, the condition of air in the pump language could be replaced by language describing an indicator of air in the pump.

The method may be implemented in a system comprising the heater and the conduit and comprises determining a power-up of the system initiated when power has been switched-on to determine the condition corresponding to air being in the pump and/or determining that the water supply has been refilled after being emptied to determine the condition corresponding to air being in the pump. For example, in this method the power having been switched-on is considered an indicator of air being present in the pump and/or or the water supply having been refilled is considered an indicator of air being present in the pump.

Accordingly, the controller of the system may be configured to determine a start-up of the system initiated when power has been switched-on to determine the condition corresponding to air being in the pump and/or to determine that the water supply has been refilled after being emptied to determine the condition corresponding to air being in the pump.

These conditions are typical conditions in which the conduit may be emptied of water and thus be filled with air. When there is air in the pump, the pumping action may generate unwanted noise. By reducing the power level when these conditions are determined, the noise can also be reduced.

The method may comprise receiving a signal from a water supply level detector to determine that the water supply has been emptied and/or that the water supply has been refilled as part of determining the condition corresponding to air being in the pump. In this way, a determination is able to be made of a likely air in the pump condition.

Likewise, the system may comprise a water supply level detector, wherein the controller is configured to receive a signal from the water supply level detector to determine that the water supply has been emptied and/or that the water supply has been refilled to determine the condition corresponding to air being in the pump.

Likewise, the method may comprise receiving a signal indicative of power switch-on as part of determining the condition corresponding to air being in the pump. Again, this allows a determination to be made of a likely air in the pump condition, since the water supply is often emptied when the power is switched-off causing air in the pump or evaporation can occur during power switch-off causing air in the pump.

In particular, the system may comprise a power switch component configured to generate a signal indicative of power switch-on and the controller is configured to receive the signal indicative of power switch-on to determine the condition corresponding to air being in the pump. The power switch component may include a user operable power button.

A preferred method comprises measuring a temperature in the heater as a function of the pump being operated to determine the condition corresponding to air being in the pump.

This embodiment of the invention may exploit that if the pump pumps water into the heater, it may cool the heater, which cooling may be detected as a characteristic lowering of the temperature in the heater; if, however, the pump pumps air, thereby failing to deliver water into the heater, such characteristic lowering of the temperature in the heater is not observed. Therefore, in a particularly preferred method, the air in the pump condition is met if the temperature in the heater fails to detect a lowering of the temperature in the heater characteristic for water being pumped into the heater.

Likewise, the preferred water heating system comprises a temperature sensor for measuring a temperature in the heater. The temperature sensor may, for example, be a NTC or PTC type thermistor or a thermocouple. Moreover, the preferred controller is be configured to determine the temperature inside the heater to determine the condition corresponding to air being in the pump.

The method may comprise receiving a water or steam request signal and, based thereon, the method includes initiating pumping water from the water supply to the heater through the conduit at the lower power level when there is the condition corresponding to air being in the pump and thereafter pumping water from the water supply to the heater at the higher power level in a regulated way according to the water steam flow level setting. The steam request signal may be generated in response to user actuation of a button, eg a steam release button of an iron or a beverage preparation button on a hot beverage machine. The button may comprise a touch sensitive part, eg of a handle of the iron, or a depressible button or other user actuation means.

The system may comprise a user actuator for generating a water or steam request signal and the controller is configured to drive the pump at the higher power level according to the control scheme for achieving the water or steam flow level setting in response to the water or steam request signal and the controller is configured to drive the pump at the lower power level before driving the pump at the higher level according to the control scheme when there is the air in the pump condition.

The method may comprise ramping-up the power from an initial lower power level to the higher power level. The power may be ramped-up in a stepwise (including plural steps) or continuous manner. The ramping of power may ensure smooth operation and overall reduced noise. Alternatively, the pumping power can be at a constant lower power level when there is an air in the pump condition and transitioned to the higher power level for regulated steam generation according to the steam level setting in a single step. The lower power level may include both the initial lower power level (non-zero power to ensure pumping in the conduit is taking place) and at least part of any power ramp-up to the higher power level. The ramp-up time, ie the time it takes to reach the higher power level starting out from the initial lower power level preferably is within the range between 0.2 and 10 seconds, more preferably between 0.5 and 5 seconds, most preferably between 1 and 2.5 seconds. The higher power level preferably is more than 80%, more preferably more than 90 % of the maximum pump power available. The initial lower power level preferably is less than 50 % of the maximum pump power available, more preferably is less than 50 % of the higher power level. The initial lower power level preferably is more than 30 % of the higher power level, more preferably more than 30 % of the maximum pump power available.

The controller of the system may be configured to ramp-up the power from an initial lower power level to the higher power level in a continuously graduated or step-wise manner. The lower power level may include the initial lower power level and at least part of any ramp-up to the higher power level.

The method may comprise transitioning from a pump off state to an initial lower power level included in said lower power level when there is the air the pump condition. The transition may be carried out in a single step, plural steps or in a continuously increasing way.

The controller may be configured to transition the drive of the pump from a pump off state to an initial lower power level included in said lower power level when there is the air the pump condition. In particular, the transition may be carried out in a single step, plural steps or in a continuously increasing way.

The initial lower power level may be predetermined. That is, the initial lower power level can be factory set or is otherwise not dependent on operating condition or in any way determined by an algorithm.

The method may comprise operating at the lower power level only for as long as it takes to displace air in the conduit that connects the water supply with the pump. That is, the method comprises clearing air in the conduit at a lower power level before operating at the higher power level for achieving the steam level setting. In this way, efficient operation and lower noise is ensured. The time required to displace air in the conduit, assuming a conduit full of air, at the lower pumping power level can be predetermined since the length of the conduit is fixed and the lower pumping power versus time profile is known. In this way, the objective of low noise can be achieved without a significant increase in operational complexity. Accordingly, the lower power level can be implemented without dependence parameters such as temperature sensing. The method may comprise ramping-up the power from an initial power level to the higher power level as described above such that the time required to displace air in the pump is served during the above ramping-up of power to the higher power level. Alternatively, the air could be displaced in the pump when operating at a constant initial lower power level and a single step transition to the higher power level could be performed.

Accordingly, the preferred controller is configured to drive the pump at the lower power level only for about as long as it takes to displace air in the conduit, assuming the conduit connecting the heater and the water supply is full of air and thereafter to drive the pump at the higher power level according to the control scheme for achieving the water or steam flow level setting. The controller of the system may be configured to operate at the lower power level according to a predetermined initial lower power level and at least part of any power ramp-up to the higher power level in order to clear air from the pump before operating at the higher power level.

The method may comprise determining a water or steam flow level setting in response to a user selection of a water or steam flow level. Alternatively, the water or steam flow level setting may be determined automatically (i.e. without user selection thereof). The water or steam flow level setting may be selected from at least low and high water or steam flow levels. The water or steam flow setting may be selected from at least low, medium and high water or steam flow levels. The water or steam flow level setting may be selected from a discrete range of settings or in a continuous way. The higher power level for pumping water from the water supply to the heater may be regulated according to the determined water or steam flow level setting. Regulation of the pumping power may be controlled according to a predetermined pumping rate for achieving the water or steam flow level setting or according to a feedback loop based on one or more parameters (eg pressure) to achieve the steam level setting.

The system may comprise a water flow level setting button or a steam flow level setting button for operation by a user to select a water or steam flow level setting from at least high and low water or steam flow level settings. The controller is configured to regulate power driving the pump at the higher power level for pumping water from the water supply to the heater according to the selected water or steam flow level setting, and wherein, depending on whether there is an air in the pump condition, the controller is configured to drive the pump at the lower power level before driving the pump at the higher power level according to the selected water or steam flow level setting.

The lower power level sets a lower pumping power than the higher pumping power levels for achieving a water or steam flow level setting including any user selectable water or steam flow level settings and any automated water or steam flow level settings.

The pumping power may be adjusted to attain the lower and higher power levels by changing an average voltage driving a pump. The pump may be driven by a driving signal, such that the average voltage may be changed by adjusting a duty cycle or frequency of the driving signal.

Accordingly, the preferred controller of the system is configured to generate a pump drive signal to which the pump is responsive. The controller may be configured to adjust the power of the pump drive signal to attain the lower and higher power levels by changing an average voltage thereof. The controller may be configured to change the average voltage by adjusting a duty cycle or frequency of the pump drive signal.

Preferably, the pump for pumping water from the water supply to the heater is a solenoid pump. Yet, other pump types are possible and known to the skilled person.

The method may comprise supplying the generated steam through vents in a soleplate of an iron.

Accordingly, the system may comprise an iron soleplate having one or more steam vents, and the controller is configured to drive the pump to pump water from the water supply through the conduit to the heater for generating steam for supply through the vents of the iron soleplate.

The water supply may be a water tank that is removable to allow for refilling, for example refilling at a tap.

In a preferred embodiment of the invention, the heater is a steam generator. The steam generator may for example be a boiler or an instantaneous steam generator such a metal (preferably aluminium) block comprising channels for water to flow through and be heated. Preferably, in this embodiment of the invention "the higher power level is regulated according to a steam level setting. Likewise, the system according to the invention is configured to drive the pump at the higher power level according to a control scheme for achieving the steam level setting.

A preferred system according to the invention is a steam iron, preferably a steam iron comprising a steam station and an iron. The method may comprise supplying steam generated by a steam generator in the seam station from the steam generator through a flexible steam conduit connecting a steam station and an iron.

The system may comprise an iron comprising the iron soleplate. The iron may be a handheld iron.

The iron may comprise a steam chamber adjacent the sole plate connected to the heater via a flexible steam conduit, for example a flexible tube or hose.

The heater may be included as part of a steam station to which the iron is connected via a flexible steam conduit. The steam conduit preferably is flexible to allow a user to move the iron relative to the steam station during ironing. The pump may be included in the steam station.

In an alternative embodiment, the heater and the pump are included as part of the iron rather than being located in a steam station. In this case, the water supply may be provided remotely from the heater and the pump may be present either at the location of the water supply or at the location of the iron. The conduit connecting the pump with the heater or the water supply with the pump, respectively, preferably is flexible to allow a user to move the iron relative to the steam station during ironing

In some embodiments of the invention, the sole plate of an iron may act as the steam generator. In this case, the temperature sensor may be attached to the sole plate and the temperature in the heater has to be understood as a temperature of the sole plate.

The soleplate of the iron may be associated with a heating element.

The method may comprise controlling the soleplate heating element to achieve a soleplate temperature level setting. The heating level setting may be user selectable or automatically set (i.e. without user selection thereof). The soleplate heating element may be powered according to a control feedback loop to achieve the temperature level setting, for example wherein the feedback uses a sensed temperature of the soleplate to determine power to be applied to the soleplate heating element.

The system may comprise a soleplate temperature sensor and the controller of the system may be configured to control the soleplate heating element to achieve a soleplate temperature level setting based on a control feedback loop that is dependent at least on the sensed temperature of the soleplate. The system may comprise a temperature level setting button that is user operable to select the soleplate temperature level setting. The button may be operable to select from a discrete range of temperature level settings. The button may be in the form of a dial, depressible button, touchscreen, a touch sensitive element or the like.

The method may comprise pumping the water from the water supply through the conduit to a heater constituting a steam generator, wherein the heater comprises a heating element. The power applied to the steam generator heating element may be adjusted according to the water or steam flow level setting. That is, the power driving the heating element and the pumping power is controlled in order to achieve the water or steam flow level setting.

Accordingly, the heater of the system may comprise a heating element. The controller is configured to drive the heating element and the pump using respective drive signals at power levels regulated so as to achieve the water or steam flow level setting.

The present invention provides a method of heating water in a household appliance and a water heating system that operate with reduced noise. In particular, unwanted noise caused by pumping an air filled pump can be reduced, where the conduit connects a water supply and a heater. The noise reduction is made possible by reducing the power driving the pump as compared to higher power levels.

### Brief description of the figures

The invention is illustrated in greater detail with the aid of schematic drawings, in which:
- Figure 1:: Fig. 1 shows a steam station;
- Figure 2:: Fig. 2 shows a control panel;
- Figure 3:: Fig. 3 shows an iron;
- Figure 4:: Fig. 4 shows a box diagram of various parts of the steam generation system described herein;
- Figure 5:: Fig. 5 shows a power versus time relationship for use in controlling a pump;
- Figure 6:: Finally, Figure 6 shows a box diagram of various parts of a hot beverage machine.

### Detailed description of an embodiment of the invention

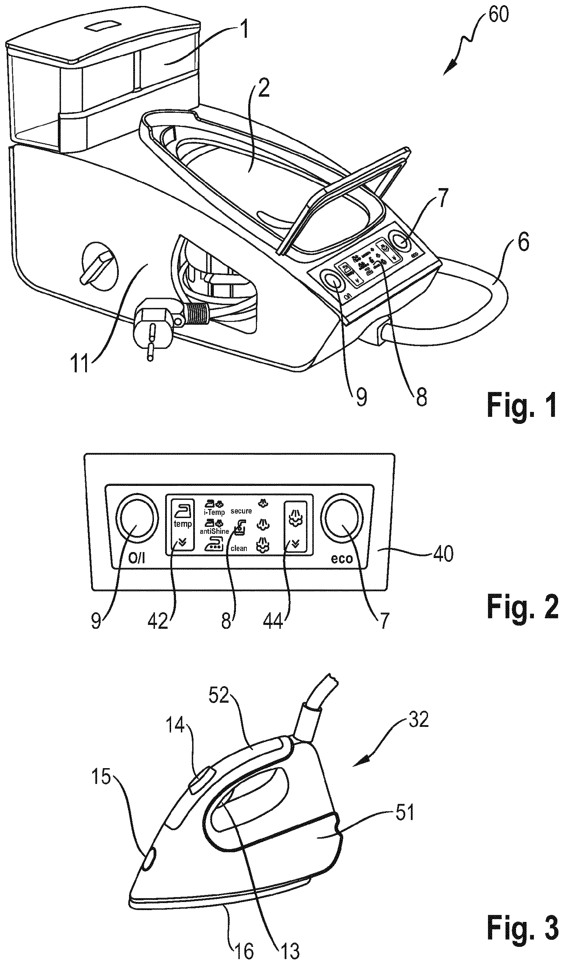

Referring to figures 1, 3 and 4, there is shown a steam generation system 36 comprising a removable water tank 1 embodying a water supply, a heater in the form of a boiler 28, a pump 22, a conduit 26, and a controller 20 configured to drive the pump 22 to pump water from the removable water tank 1 to the boiler 28 for generating steam. The pump 22 in this embodiment is a solenoid pump. The water tank 1 is removable to allow for easy filling at a tap.

The system 36 comprises a steam station 60 that includes the removable water tank 1, a housing 11 internally comprising the boiler or steam generator 28 and the pump 22. The system 36 comprises a handheld iron 32 movable by a user relative to the steam station 60 during ironing. The iron 32 is connected to the steam station 60 via a flexible steam conduit 6. The steam station 60 comprises an upper platform 2 upon which the iron 32 can be placed and secured when not being used.

The system 36 comprises a temperature sensor (not shown) in the form of a thermistor. The controller 20 is configured to receive a signal from the temperature sensor to determine a condition corresponding to air being in the pump 22. The water supply level detector may comprise a float or a buoy. The system also comprises a main power button 9 as shown in figure 2 embodying a power switch component configured to generate a signal indicative of power switch-on and the controller 20 is configured to receive the signal indicative of power switch-on to determine a condition corresponding to air being in the pump 22.

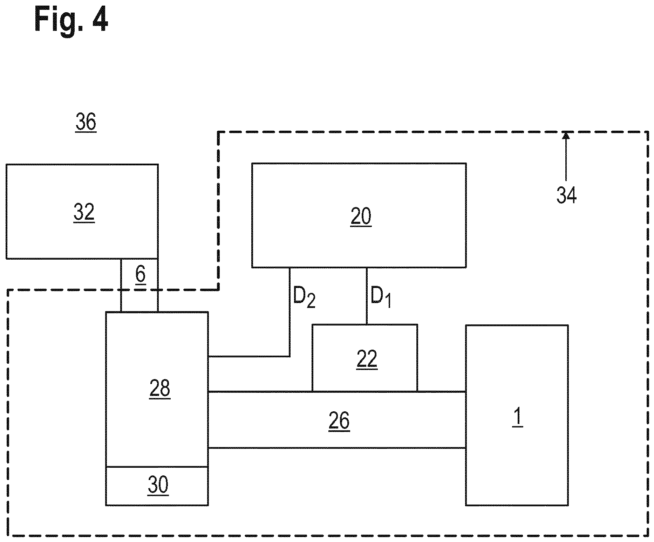

Referring to figure 4, the controller 20 is configured to generate a pump drive signal D₁ to which the pump 22 is responsive. The controller 20 may adjust the power of the pump drive signal D₁ to attain lower and higher power levels by changing an average voltage thereof. The controller 20 may be configured to change the average voltage by adjusting a duty cycle or frequency of the pump drive signal D₁.

Continuing to refer to figure 4, the boiler 28 comprises a boiler heating element 30. The controller 20 is configured to drive the boiler heating element 30 with a drive signal D₂ and to drive the pump using a drive signal D₁, wherein the respective power levels of the signals D₁ and D₂ are regulated so as to achieve a steam flow level setting.

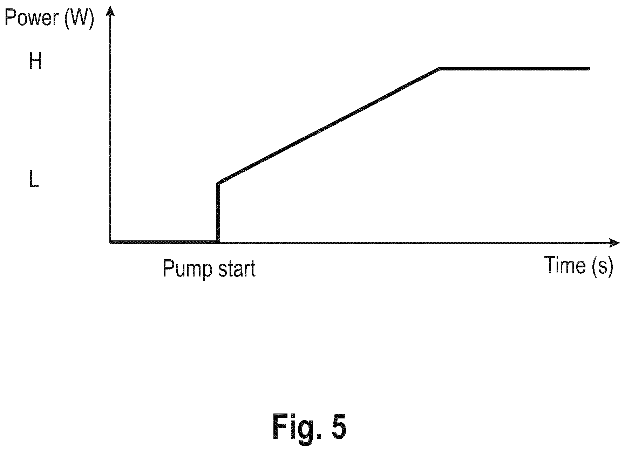

Referring to figure 5, the controller 20 is configured to begin driving the pump 22 at an initial lower power level L when there is an air in the pump 22 condition and wherein the controller 20 is configured to drive the pump 22 at a higher power level according to a control scheme for achieving a steam flow level setting. The initial lower power level L is predetermined in power at the beginning and includes a ramp-up in power to the higher power level H. The power provided to the pump transitions from zero power (pump off state) to the initial lower power level L in a single step in this embodiment. The amount of time required at the lower power level, which includes the initial power level L and the ramp to the higher power level H, to displace any air in the pump 22 is fixed because the length of the conduit 26 is fixed. The higher power level H depends on a control algorithm that sets the higher pumping power based at least on a steam flow level setting. The controller 20 is configured to ramp-up the power from the initial lower power level L, which is predetermined, to the higher power level H. In the embodiment of figure 5, this occurs in a continuously increasing way, although stepwise increases (e.g. single step or plural steps) are possible. One alternative to the ramped power time profile shown in figure 5 would be to operate the pump 22 at a constant initial power level for the necessary time to clear the air in the pipe and thereafter to step-up the power to the higher power level H set by a control algorithm for achieving a current steam flow level setting.

Continuing to refer to figure 5, when an air in the pump 22 condition is determined, the pump 22 begins operating at an initial low power level L to begin displacing the air in the pump 22 and replace it with water from the removable water tank 1. The controller 20 is then configured to ramp the power up to the higher power level H so as to continuously increase the power from the initial lower power level L to the higher power level H. The lower power level described herein includes at least part of the ramp-up in power to the higher power level H defined by the control scheme such that air is being displaced in the pump 22 during application of the initial power level L and also during the ramp-up in power to the higher power level H. By operating at the lower power level during displacement of air, unwanted noise can be reduced as compared to if the air was displaced by driving the pump 22 at the higher power level H.

For example, the pump 22 can be a solenoid pump where a diode is placed normally in series. In this case, the maximum pump power available (100 %) is when the pump with the diode in series is connected to the home mains voltage (typically between 220 and 240 V). In this case, the power level can be controlled by controlling the voltage feed to the pump 22 where the higher power level can be adjusted, for example, between 80 % and 100 % and the lower power level can be adjusted between 30 % and 50 %. The lower power level is adjusted in order to be able to displace the air inside the circuit and to prime the pump 22 in a way that the noise is decreased as much as possible. The ramp-up time between the lower power level and the high power level can be adjusted between 0.5 and 5 seconds, depending on the length of the pump 22 and tubes circuit for example.

Referring to figure 3, the system 36 comprises an iron 32 having a heat insulating housing 51 defining a handle 52 and a soleplate 16 providing a heated flat surface for ironing. The soleplate 16 includes one or more vents (not shown) through which steam is released for steam ironing. The iron 32 includes a steam chamber (not shown) adjacent the soleplate 16 for receiving steam and distributing steam through the vents of soleplate 16 to an item being ironed. In an alternative embodiment of the invention, there is no steam chamber separate from the boiler 28 but the boiler 28 doubles as the steam chamber.

Continuing to refer to figure 3, the iron 32 comprises one or more steam release buttons 13, 14 embodying a user actuator for generating a steam request signal. The controller 20 is configured to drive the pump 22 at the higher power level H according to the control scheme for achieving the steam flow level setting in response to actuation of the buttons 13, 14 and the controller 20 is configured to drive the pump 22 at the lower power level including the initial lower power level L before driving the pump 22 at the higher level according to the control scheme when there is the air in the pump 22 condition.

The iron 32 includes a heating element (not shown) for heating the soleplate 16. The system 36 comprise a soleplate temperature sensor (not shown) and the controller 20 is configured to control the soleplate heating element to achieve a soleplate temperature level setting based on a control feedback loop that is dependent at least on the sensed temperature of the soleplate 16.

Referring to figure 2, the system 36 comprises a control panel 40 having a touch sensitive display 8. The control panel 40 is included on the steam station 60 in this embodiment. The touch sensitive display 8 includes a steam flow level selection touch icon 44 embodying a steam setting button for operation by a user to select a steam flow level setting from low, medium and high steam flow level settings. The controller 20 is configured to regulate power driving the pump 22 at the higher power level H for pumping water from the water supply 1 to the boiler 28 according to the selected steam flow level setting.

The display 8 includes a temperature level selection icon 42 embodying a temperature level setting button that is user operable to select the soleplate temperature level setting. The button is operable to select from a discrete range of temperature level settings including low, medium and high soleplate 16 temperature levels.

The system 36 operates as in this embodiment as follows.

The controller 20 receives a steam request signal generated by operation of the one or more steam release buttons 13, 14. The controller 20 responds to the steam request signal by controlling the pump 22 and the boiler heating element 30 at powers defined by drive signals D₁ and D₂ and according to one or more control schemes/algorithms operating in a closed loop feedback manner to achieve a steam flow level setting. The closed loop feedback scheme may be dependent at least on a sensed steam pressure in the boiler 28. The steam flow level setting corresponds to an automatically generated steam flow rate or a user selected steam flow rate according to the option selected by the user using the steam flow level selection touch icon 44. If an air in the pump 22 condition is determined, the controller 20 will cause the pump 22 to first clear the conduit 26 of air at a lower power level including the initial lower power level L before operating the pump 22 at the higher power level H according to the closed loop feedback algorithm for achieving the steam flow level setting.

The controller 20 is able to determine an air in the pump 22 condition in at least two ways. In a first method, the controller 20 receives a signal from a temperature sensor to determine the condition corresponding to air being in the pump 22. In a second method, the controller 20 receives a signal indicative of power switch-on generated as a result of the main power button 9 being actuated. If an air in the pump 22 condition is determined based on either or both of the first and second methods, then the pump power begins operating at the initial lower power level L before being ramped up at a relatively higher power level in the manner shown in figure 5 or otherwise increased to the higher power level H defined by the steam generation control scheme. All air in the pump 22 is able to be displaced during operating the pump 22 at the lower power level including the initial lower power level L and at least part of the power ramp-up portion to the higher power level H.

The initial lower power level L and the ramp-up time before the higher power level H is set to endure for just long enough to displace air in the pump 22 assuming the conduit 26 is filled with air.

The embodiment shown in the figures includes a steam station connected to an iron via a flexible steam conduit. In a variant according to the invention, the iron can itself comprise the pump, the boiler and the water tank.

The features as described in the above description, claims and figures can be related to the invention in any combination.

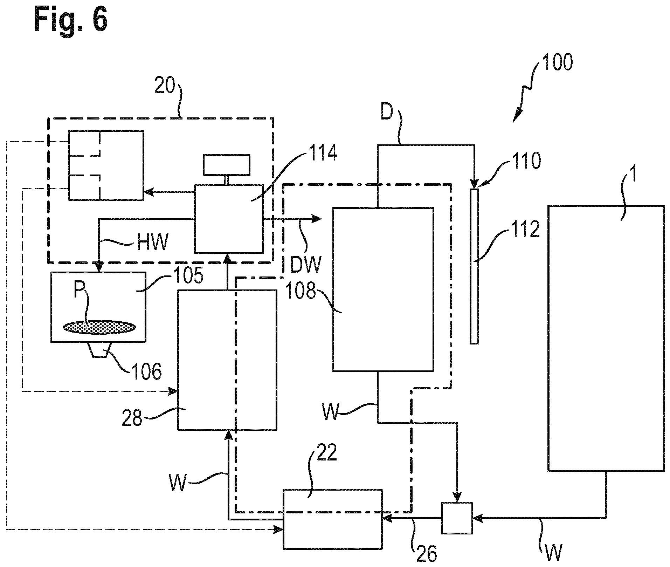

Figure 6 shows a corresponding arrangement in hot beverage machine 100 for preparing coffee drinks. The machine 100 comprises a water tank 1 and a pump 22 that pumps the water W to a heater 28. In a coffee preparation mode, the water HW heated by the heater is directed into the brewing chamber 105 containing a coffee pad P. The Moreover, the heater 28 of the hot beverage machine 100 can act as a steam generator for preparing hot steam in a steam generation mode of the machine 100. In this mode, a mixture of water and steam DW is directed into a steam separation chamber. The steam D exits the machine via a steam outlet 110 comprising a cappuccino nozzle 112. A controller 20 controls a valve 114 for switching between the beverage preparation mode and the steam generation mode.

As in the case of the steam iron 60, 32 the hot beverage machine 100 comprises a temperature sensor (not shown). The controller 20 is configured to receive a signal from the temperature sensor to determine a condition corresponding to air being in the pump 22. Wirth regard to the controlling the power level of the pump 22 depending on there being a condition corresponding to air in the pump 22, the hot beverage machine 100 contains the same components and operates in the same way as the steam iron 60, 32 above.

## Claims

1. A method of heating water in a household appliance, comprising pumping water from a water supply (1) to a heater (28) through a conduit (26) at a lower power level depending on there being a condition corresponding to air being in the pump (22), the method further comprising pumping water from the water supply (1) to the heater (28) at a higher power level.

2. The method of claim 1 implemented in a water heating system comprising the heater (28) and the conduit (26), wherein the method comprises determining a start-up of the water heating system initiated when power has been switched on to determine the condition corresponding to air being in the pump (22) and/or determining that the water supply (1) has been refilled after being emptied to determine the condition corresponding to air being in the pump (22).

3. The method of claim 1 or 2, comprising receiving a signal from a water supply level detector to determine that the water supply (1) has been emptied and/or that the water supply (1) has been refilled as part of determining the condition corresponding to air being in the pump (22) and/or receiving a signal indicative of power switched on as part of determining the condition corresponding to air being in the pump (22).

4. The method of claim 1, 2 or 3, comprising ramping-up the power from an initial lower power level to the higher power level, wherein said lower power level includes the initial lower power level and at least part of the ramp-up of the power to the higher power level.

5. The method of claim 4, wherein the initial lower power level is predetermined.

6. The method of any preceding claim, wherein the method comprises operating at the lower power level only for as long as it takes to displace air in the conduit (26) and thereafter operating at the higher power level.

7. The method of any preceding claim, comprising determining a steam level setting in response to a user selection of a steam level from at least low and high steam flow levels, wherein the higher power level for pumping water from the water supply (1) to the steam generator (28) is regulated according to the determined steam level setting.

8. The method of any preceding claim, comprising generating steam and supplying generated steam from the steam generator (28) through a flexible steam conduit connecting a steam station (60) and an iron (32).

9. A water heating system in a household appliance (60, 32, 100), comprising a water supply (1), a heater (28), a pump (22), a conduit (26) and a controller (20) configured to drive the pump (22) to pump water from the water supply (1) through the conduit (26) to the heater (28) for heating the water, wherein the controller (20) is configured to drive the pump (22) at a lower power level depending on there being an air in the pump (22) condition and wherein the controller (20) is configured to drive the pump (22) at a higher power level.

10. The system of claim 9, wherein the controller (20) is configured to operate in a first mode when an air in the pump (22) condition has been determined in which first mode the controller (20) is configured to first drive the pump (22) at the lower power level and thereafter drive the pump (22) at the higher power level and the controller (20) is configured to operate in a second mode when no air in the pump (22) condition has been determined in which second mode the controller (20) is configured to drive the pump (22) at the higher power level without first driving the pump (22) at the lower power level.

11. The system of claim 9 or 10, wherein the controller (20) of the system is configured to determine a start-up of the system initiated when power has been switched on to determine the condition corresponding to air being in the pump (22) and/or to determine that the water supply (1) has been refilled after being emptied to determine the condition corresponding to air being in the pump (22).

12. The system of claim 9, 10 or 11, comprising a power switch component configured to generate a signal indicative of power switch-on and the controller (20) is configured to receive the signal indicative of power switch-on to determine the condition corresponding to air being in the pump (22).

13. The system of any one of claims 9 to 12, comprising a water supply level detector, wherein the controller (20) is configured to receive a signal from the water supply level detector to determine that the water supply (1) has been emptied and/or that the water supply (1) has been refilled to determine the condition corresponding to air being in the pump (22).

14. The system of any one of claims 9 to 13, wherein the controller (20) is configured to drive the pump (22) at the lower power level only for about as long as it takes to displace air in the conduit (26), assuming the conduit (26) connecting the heater (28) and the water supply (1) is full of air and thereafter to drive the pump (22) at the higher power level.

15. The system of any one of claims 9 to 14, comprising a steam station (60) that includes the water supply (1) and the pump (22), a handheld iron (32) movable by a user relative to the steam station (60) during ironing, wherein the iron (32) comprises an iron soleplate (16) having one or more steam vents, wherein the iron (32) is connected to the steam station (60) via a steam conduit (6), and wherein the controller (20) is configured to drive the pump (22) to pump water from the water supply (1) through the conduit (26) to the heater (28) for generating steam for supply from the steam station (60) to the iron (32) through the steam conduit (6) and through the vents of the iron soleplate (16) for steam ironing.
